# EUROPEAN PATENT APPLICATION

(11) **EP 2 000 946 A1**
(43) Date of publication of application: **10.12.2008**
(21) Application number: 08156053.4
(22) Date of filing: 12.05.2008
(51) Int. Cl.: G06K 7/00

(54) **Mounting Socket for Memory Card and SIM Card for Mobile Phone**

(30) Priority: 04.06.2007 KR 20070054528
(71) Applicant: Tyco Electronics AMP Korea Limited, Kyungsangbuk-Do, 712-838 (KR)
(72) Inventor: Kim, Jung-Hoon c/o TYCO Electronics AMP Korea Ltd., Kyungsangbuk-Do (KR)
(74) Representative: Townsend, Stephen

(57) **Abstract**

Disclosed is a mounting socket for a memory card and a SIM card for a mobile phone, wherein a memory card socket, which separates a SIM card and a memory card from each other, and a SIM fixing member, which is used to fix the SIM card, have a significantly reduced thickness, improving adaptability to a slim mobile phone. The mounting socket includes a socket body made of a nonmetallic insulating material. The socket body has an insertion recess, an installation hole vertically perforated in the remaining region thereof, and a mounting hole perforated vertically in the insertion recess. The mounting socket further includes a separating plate made of a thinner and harder metal material than the socket body, and a card housing made of a thinner and harder metal material than the socket body.

## Description

### BACKGROUND OF THE INVENTION

### Field of the Invention

The present invention relates to a mounting socket for a memory card and a SIM card for a mobile phone, and more particularly, to a mounting socket for a memory card and a SIM card for a mobile phone, wherein a memory card socket, which separates a SIM card and a memory card from each other, and a SIM fixing member, which is used to fix the SIM card, have a significantly reduced thickness, improving adaptability to a slim mobile phone.

### Description of the Related Art

Generally, a memory card is used as an external element, to expand a storage space in a variety of equipment, such as a mobile phone, PDA, digital camera, and the like. On the basis of a size and standard thereof, the memory card has been introduced into a variety of forms, such as a Secure Digital (SD) memory card, Multimedia Card (MMC), Compact Flash (CF), a memory stick, and the like.

In addition, a Subscriber Identification Module (SIM) card serves to store, for example, personal financial payment information, and is utilized as a non-contact type electronic credit card, traffic card, pre-paid card, and the like. Nowadays, the utilization of the SIM card is gradually increasing, for example, for various functions of mobile phones.

In particular, functionality of mobile phones is increasingly diversified. Mobile phones can be used, for example, as payment means when a credit card is received in a phone body, as well as a player of music and moving images.

However, most conventional mobile phones have been mainly fabricated in such a way that a memory card is incorporated therein to achieve a Video on Demand (VOD) or MP3 player function. This fabrication has a problem of low utilization efficiency of the memory card because it is incorporated within the memory phone, and prevents users from being able to expand memory capacity of the mobile phone.

An external memory card has been introduced to solve the above-described problem, and a multiplicity of technologies for mounting the memory card in a mobile phone, together with a SIM card, have been developed.

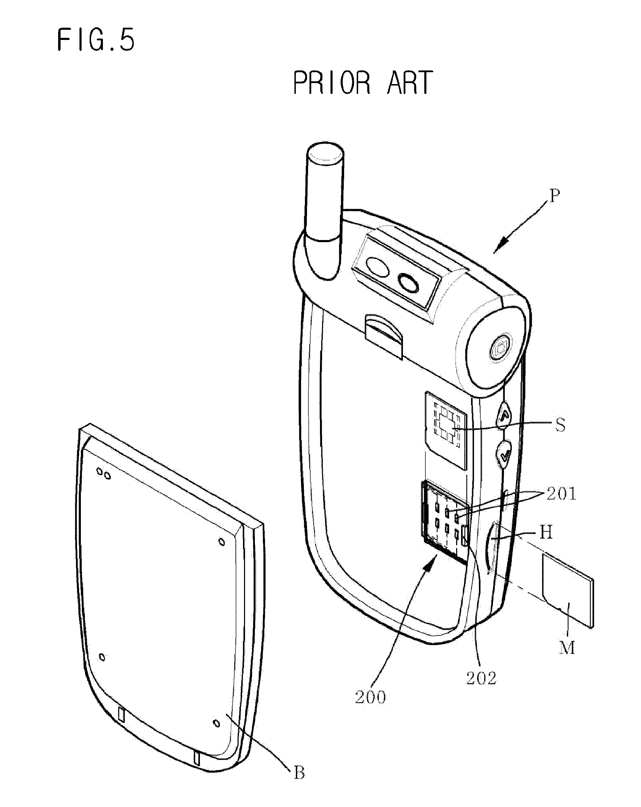

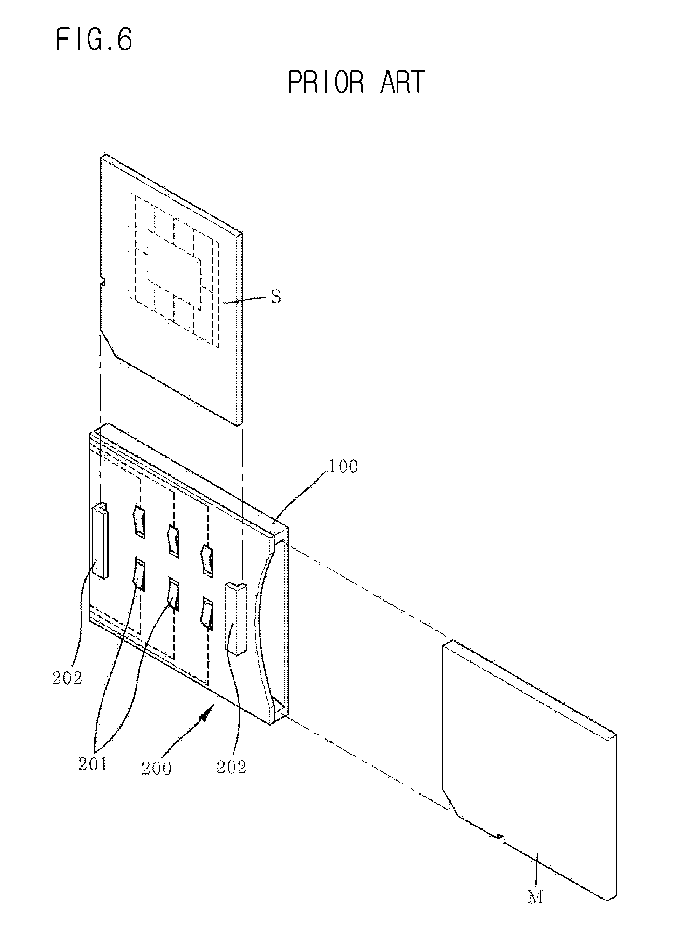

As shown in FIGS. 5 and 6, a mounting socket for a memory card and a SIM card installed in a conventional mobile phone includes: a memory card socket 100 provided to allow a memory card M to be inserted into or separated from an insertion hole H formed in one side of a mobile phone P; and a SIM card mount 200 including a plurality of SIM card connecting terminals 201 and SIM fixing pieces 202 integrally formed at a surface of the memory card socket 100, the SIM card mount 200 being used to fixedly couple a SIM card S to a rear surface of the mobile phone P in a state wherein a battery B is separated from the rear surface of the mobile phone P, such that the SIM card S is connected with the SIM card connecting terminals 201.

In the conventional mounting socket having the above-described configuration, the memory card M is inserted into the memory card socket 100 from one side of the memory card socket 100, and the SIM card S is coupled to the exposed rear surface of the mobile phone P such that it is mounted to the SIM card mount 200.

However, the above-described prior art has the following problems.

The memory card socket, which separates the SIM card and the memory card from each other, and the SIM fixing pieces 202 are significantly thick, making application thereof to a slim mobile phone difficult. Furthermore, when applied to a mobile phone, the memory card socket is the main reason of relatively increasing a thickness of the mobile phone.

### SUMMARY OF THE INVENTION

Therefore, the present invention has been made in view of the above problems, and it is an object of the present invention to provide a mounting socket for a memory card and a SIM card for a mobile phone, wherein a memory card socket, which separates a SIM card and a memory card from each other, and a SIM fixing member, which is used to fix the SIM card, have a significantly reduced thickness, improving adaptability to a slim mobile phone.

It is another object of the present invention to provide a mounting socket for a memory card and a SIM card for a mobile phone, which can assure easy separation and coupling of constituent components, resulting in easy assembly of the mounting socket.

It is a further object of the present invention to provide a mounting socket for a memory card and a SIM card for a mobile phone, which can efficiently prevent a short circuiting between connecting terminal for the cards and metal plates thereof.

In accordance with the present invention, the above and other objects can be accomplished by the provision of a mounting socket for a memory card and a Subscriber Identification Module (SIM) card for a mobile phone, comprising: a socket body made of a nonmetallic insulating material, the socket body including an insertion recess defined in a partial region of an upper surface thereof to provide a space for insertion of the SIM card, an installation hole vertically perforated in the remaining region thereof such that a memory card connecting terminal is coupled upward from a lower surface of the socket body so as to be exposed from an upper surface of the socket body, and a mounting hole perforated vertically in the insertion recess to expose a SIM card connecting terminal from the insertion recess; a separating plate made of a thinner and harder metal material than the socket body, the separating plate being separably coupled to the upper surface of the socket body, to cover the insertion recess so as to define a ceiling of the insertion recess; and a card housing made of a thinner and harder metal material than the socket body, the card housing being fitted to the socket body, to allow the memory card to be fitted to an upper surface of the separating plate above the socket body.

The socket body may further include upwardly-protruding coupling portions formed at opposite side ends of the insertion recess, and the separating plate may include inverted U-shaped coupling portions formed at opposite side ends thereof, to allow the upwardly-protruding coupling portions to be inserted into the respective inverted U-shaped coupling portions.

Each of the upwardly-protruding coupling portions of the socket body may be formed, at an outer side surface thereof, with a pair of coupling protrusions, and each of the inverted U-shaped coupling portions of the separating plate may be perforated, in an outer side surface thereof, with a pair of coupling holes, to allow the coupling protrusions to be elastically fitted into the respective coupling holes.

The inverted U-shaped coupling portions of the separating plate may be formed, at inner side surfaces thereof, with elastic supporting members, respectively, to elastically support the memory card when the memory card is fitted to an upper surface of the separating plate.

The separating plate may include a short-circuit-proof hole formed at a position corresponding to an upper end of the SIM card connecting terminal, to prevent short circuiting due to contact between the separating plate and the upper end of the SIM card connecting terminal.

The socket body may further include outwardly-inclined protrusions formed at distal ends of both side surfaces thereof, and the card housing may include side walls having inwardly-bent low ends and configured to be slidably fitted to the side surfaces of the socket body, and fixing holes formed at distal ends of the side walls at positions corresponding to the outwardly-inclined protrusions to allow the outwardly-inclined protrusions to be elastically inserted into the respective fixing holes.

The card housing may further include a short-circuit-proof hole perforated at a position corresponding to an upper end of the memory card connecting terminal, to prevent short circuiting due to contact between the card housing and the upper end of the memory card connecting terminal.

The card housing may further include an opening having an open end, to assure easy insertion/separation of the memory card.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is an exploded perspective view illustrating a mounting socket according to the present invention;
FIG. 2 is a side sectional view illustrating an assembled state of the mounting socket according to the present invention;
FIG. 3 is a perspective view illustrating a coupling relationship of the mounting socket with respect to a memory and a SIM card according to the present invention;
FIG. 4 is a side sectional view illustrating the mounting socket according to the present invention, which is coupled with the memory card and the SIM card;
FIG. 5 is a perspective view illustrating an example of the prior art; and
FIG. 6 is an enlarged perspective view illustrating important parts of the prior art.

### DETAILED DESCRIPTION OF THE PREFERRED EMBODIMENTS

Now, a preferred embodiment of the present invention will be described in more detail with reference to the accompanying drawings.

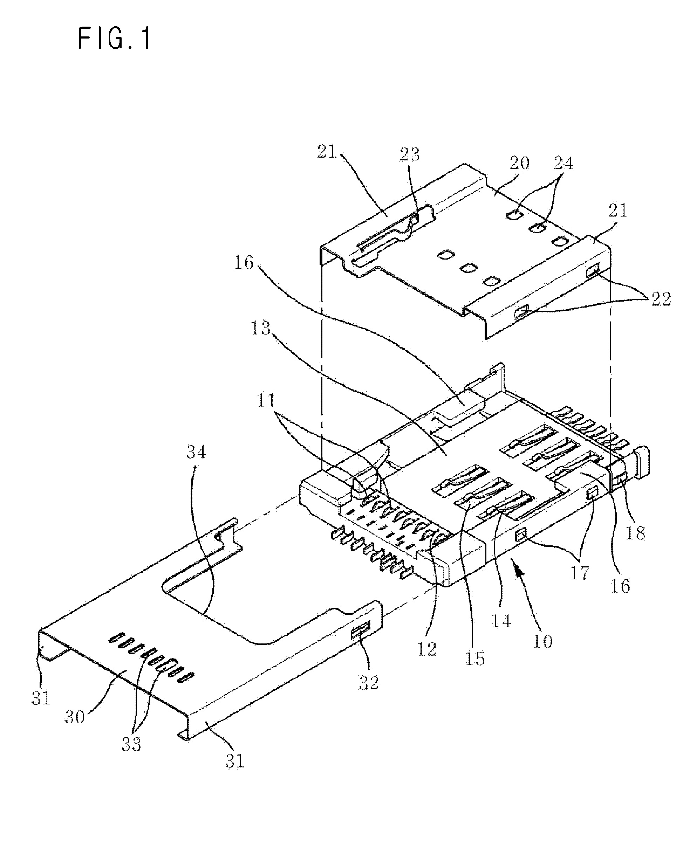

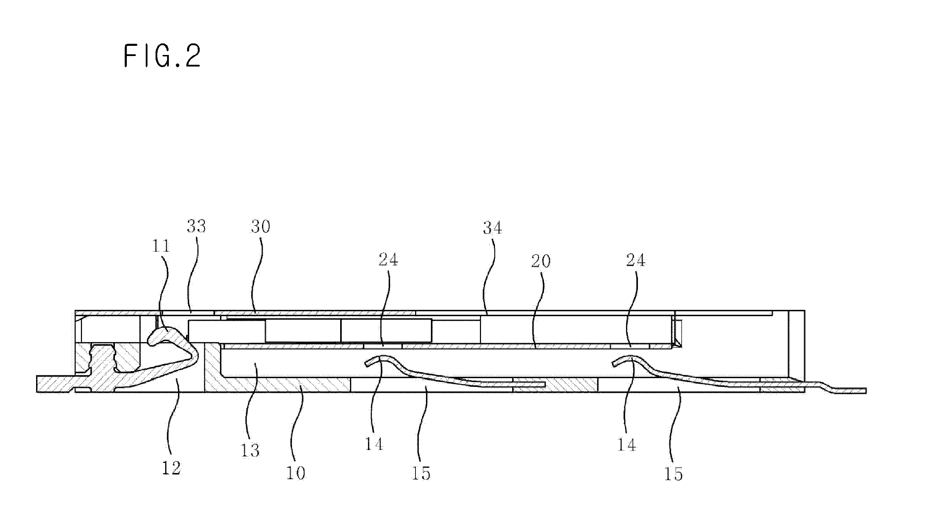

FIG. 1 is an exploded perspective view illustrating a mounting socket according to the present invention, and FIG. 2 is a side sectional view illustrating an assembled state of the mounting socket according to the present invention.

As shown, the mounting socket according to the present invention includes a socket body 10, which is made of a nonmetallic insulating material and is integrally coupled with memory card connecting terminals 11 and SIM card connecting terminals 14, a metallic separating plate 20 to be coupled to an upper surface of the socket body 10, and a card housing 30 to cover the upper surface of the socket body 10, the card housing 30 having an open bottom surface.

The socket body 10 is formed, at a partial region of the upper surface thereof, with an insertion recess 13. Mounting holes 15 for coupling of the SIM card connecting terminals 14 are perforated in the insertion recess 13 of the socket body 10, and installation holes 12 for coupling of the memory card connecting terminals 11 are perforated in the remaining side region of the socket body 10.

Accordingly, the memory card connecting terminals 11 are coupled into the respective installation holes 12 from a lower surface of the socket body 10 such that they are exposed from the upper surface of the socket body 10. Also, the SIM card connecting terminals 14 are coupled to the respective mounting holes 15, so as to be exposed from a bottom surface of the insertion recess 13. The insertion recess 13 provides a space for insertion of a SIM card.

The separating plate 20 is separably coupled to the upper surface of the socket body 10 such that it covers the insertion recess 13 to define a ceiling of the insertion recess 13. The separating plate 20 is made of a thinner and harder metal material than the socket body 10.

As a result of making the separating plate 20 with a thin metal plate, a significantly thin partition between a memory card and a SIM card can be acquired, reducing overall thickness of the mounting socket.

The socket body 10 is further formed, at opposite side ends of the insertion recess 13, with upwardly-protruding coupling portions 16. The separating plate 20 is formed at opposite side ends thereof with inverted U-shaped coupling portions 21. As the upwardly-protruding coupling portions 16 of the socket body 10 are engaged into the inverted U-shaped coupling portions 21 of the separating plate 20, the separating plate 20 is separably assembled with the socket body 10, assuring easy assembly and disassembly between the socket body 10 and the separating plate 20.

Each of the upwardly-protruding coupling portions 16 of the socket body 10 is formed, at an outer side surface thereof, with a pair of coupling protrusions 17. Each of the inverted U-shaped coupling portions 21 of the separating plate 20 is perforated, in an outer side surface thereof, with a pair of coupling holes 22. When the inverted U-shaped coupling portion 21 is inserted onto the upwardly-protruding coupling portion 16, the coupling protrusions 17 are elastically fitted into the respective coupling holes 22, thereby achieving further firm coupling between the socket body 10 and the separating plate 20.

Both the inverted U-shaped coupling portions 21 of the separating plate 20 are formed, at inner side surfaces thereof, with elastic supporting members 23, respectively. The elastic supporting members 23 serve to elastically support both sides of a memory card when the memory card is fitted to an upper surface of the separating plate 20.

The separating plate 20 further has short-circuit-proof holes 24 formed at positions corresponding to upper ends of the SIM card connecting terminals 14. The short-circuit-proof holes 24 prevent the separating plate 20 from coming into contact with the upper ends of the SIM card connecting terminals 14, thereby efficiently preventing short-circuiting due to contact between the upper ends of the SIM card connecting terminals 14 and the separating plate 20.

The card housing 30 is fitted to the socket body 10 such that a memory card can be fitted to the upper surface of the separating plate 20 above the socket body 10. The card housing 30 is made of a thinner and harder metal material than the socket body 10.

As a result of making the card housing 30 with a thin metal plate, a significantly thin sheath for the memory card can be acquired, reducing overall thickness of the mounting socket.

In addition, the socket body 10 further has outwardly-inclined protrusions 18 formed at distal ends of both side surfaces thereof. The card housing 30 includes side walls 31 having inwardly-bent low ends, and fixing holes 32 are formed at distal ends of both the side walls 31 at positions corresponding to the outwardly-inclined protrusions 18. As both the side walls 31 of the card housing 30 slide along both the side surfaces of the socket body 10, the card housing 30 is coupled to the socket body 10. At a completely coupled position of the card housing 30, the outwardly-inclined protrusions 18 of the socket body 10 are elastically inserted into the fixing holes 32 of the card housing 30, thereby achieving further firm coupling between the card housing 30 and the socket body 10.

The card housing 30 further has short-circuit-proof holes 33 perforated at positions corresponding to upper ends of the memory card connecting terminals 11. The short-circuit-proof holes 33 prevent the card housing 30 from coming into contact with the upper ends of the memory card connecting terminals 11, thereby efficiently preventing short circuiting due to contact between the upper ends of the memory card connecting terminals 11 and the card housing 30.

The card housing 30 further has a top opening 34 having an open end. The top opening 34 allows a user to easily grip the memory card when the user inserts or separates the memory card into or from the card housing 30, thereby assuring easy manual insertion/separation of the memory card.

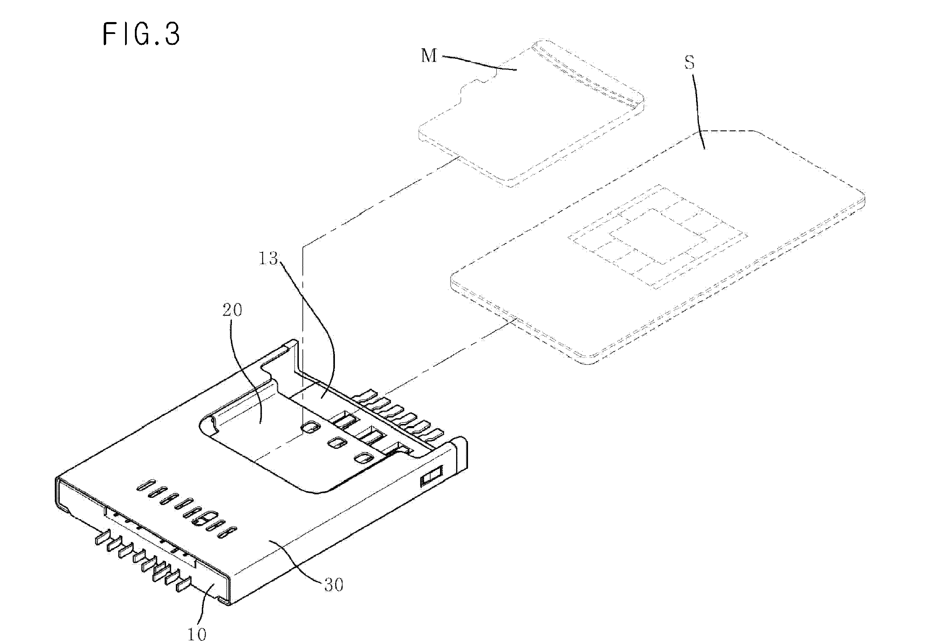

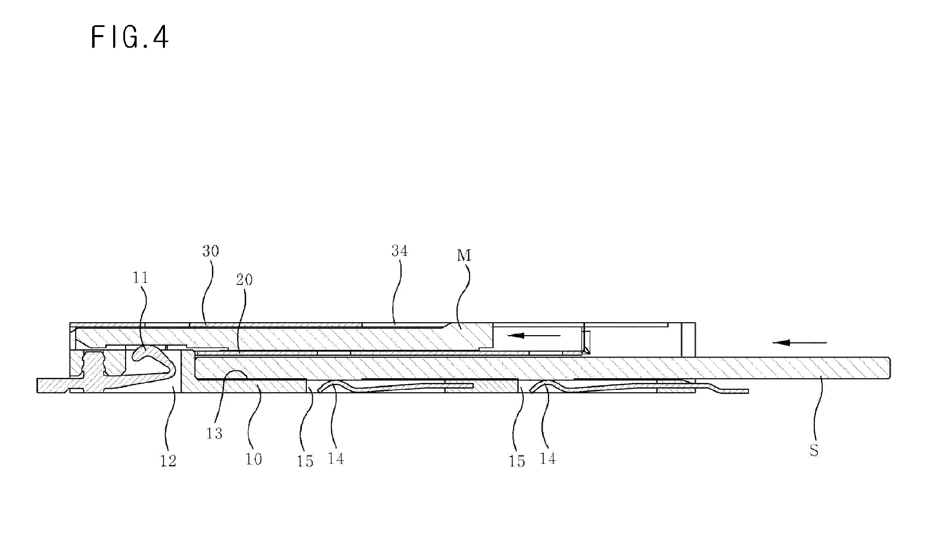

FIG. 3 is a perspective view illustrating a coupling relationship of the mounting socket with respect to a memory card and a SIM card according to the present invention. FIG. 4 is a side sectional view illustrating the mounting socket according to the present invention, which is coupled with the memory card and the SIM card.

As shown, a memory card M is inserted into a space defined between the card housing 30 and the upper surface of the separating plate 20. Once the memory card M is inserted, the memory card connecting terminals 11, arranged in the installation holes 12, come into close contact with a lower surface of the memory card M, achieving connection of the memory card M.

In this case, the user can easily insert the memory card M deeply into the card housing 30 through the top opening 34 of the card housing 30 having the open end.

A SIM card S is inserted into a space between the insertion recess 13, defined at the upper surface of the socket body 10, and a lower surface of the separating plate 20 defining the ceiling of the insertion recess 13. Once the SIM card S is inserted, the SIM card connecting terminals 14, arranged in the mounting holes 15, come into contact with the SIM card, achieving connection of the SIM card S.

As described above, the SIM card is inserted into the socket body 10, and the memory card M is inserted into a space defined between the separating plate 20 and the card housing 30, which are made of thin metal plates, overall thickness of the mounting socket can be reduced significantly.

As apparent from the above description, the present invention provides a mounting socket for a memory card and a SIM card for a mobile phone, wherein a memory card socket, which separates a SIM card and a memory card from each other, and a SIM fixing member, which is used to fix the SIM card, have a significantly reduced thickness, improving adaptability to a slim mobile phone. Further, with the provision of the thin mounting socket, the present invention has the effect of reducing the overall thickness of the mobile phone.

Further, the present invention has the effect of assuring easy separation and coupling of constituent components, resulting in easy assembly of the mounting socket.

Furthermore, the present invention has the effect of efficiently preventing short circuiting between connecting terminals for the memory card and SIM card and metal plates of the mounting socket.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A mounting socket for a memory card and a Subscriber Identification Module (SIM) card for a mobile phone, comprising:
a socket body made of a nonmetallic insulating material, the socket body including an insertion recess defined in a partial region of an upper surface thereof to provide a space for insertion of the SIM card, an installation hole vertically perforated in the remaining region thereof such that a memory card connecting terminal is coupled upward from a lower surface of the socket body so as to be exposed from an upper surface of the socket body, and a mounting hole perforated vertically in the insertion recess to expose a SIM card connecting terminal from the insertion recess;
a separating plate made of a thinner and harder metal material than the socket body, the separating plate being separably coupled to the upper surface of the socket body, to cover the insertion recess so as to define a ceiling of the insertion recess; and
a card housing made of a thinner and harder metal material than the socket body, the card housing being fitted to the socket body, to allow the memory card to be fitted to an upper surface of the separating plate above the socket body.

2. The mounting socket according to claim 1, wherein the socket body further includes upwardly-protruding coupling portions formed at opposite side ends of the insertion recess, and the separating plate includes inverted U-shaped coupling portions formed at opposite side ends thereof, to allow the upwardly-protruding coupling portions to be inserted into the respective inverted U-shaped coupling portions.

3. The mounting socket according to claim 2, wherein each of the upwardly-protruding coupling portions of the socket body is formed, at an outer side surface thereof, with a pair of coupling protrusions, and each of the inverted U-shaped coupling portions of the separating plate is perforated, in an outer side surface thereof, with a pair of coupling holes, to allow the coupling protrusions to be elastically fitted into the respective coupling holes.

4. The mounting socket according to claim 2, wherein the inverted U-shaped coupling portions of the separating plate are formed, at inner side surfaces thereof, with elastic supporting members, respectively, to elastically support the memory card when the memory card is fitted to an upper surface of the separating plate.

5. The mounting socket according to claim 1, wherein the separating plate includes a short-circuit-proof hole formed at a position corresponding to an upper end of the SIM card connecting terminal, to prevent short circuiting due to contact between the separating plate and the upper end of the SIM card connecting terminal.

6. The mounting socket according to claim 1,
wherein the socket body further includes outwardly-inclined protrusions formed at distal ends of both side surfaces thereof, and
wherein the card housing includes side walls having inwardly-bent low ends and configured to be slidably fitted to the side surfaces of the socket body, and fixing holes formed at distal ends of the side walls at positions corresponding to the outwardly-inclined protrusions to allow the outwardly-inclined protrusions to be elastically inserted into the respective fixing holes.

7. The mounting socket according to claim 1, wherein the card housing further includes a short-circuit-proof hole perforated at a position corresponding to an upper end of the memory card connecting terminal, to prevent short circuiting due to contact between the card housing and the upper end of the memory card connecting terminal.

8. The mounting socket according to claim 1, wherein the card housing further includes an opening having an open end, to assure easy insertion/separation of the memory card.
